# EUROPEAN PATENT SPECIFICATION

(11) **EP 2 149 464 B1**
(45) Date of publication and mention of the grant of the patent: **09.03.2011**
(21) Application number: 08425515.7
(22) Date of filing: 28.07.2008
(51) Int. Cl.: B60H 1/00

(54) **Air conditioning assembly for vehicles**
Klimaanlagenanordnung für Fahrzeuge
Ensemble de climatisation d'air pour véhicules

(43) Date of publication of application: 03.02.2010
(73) Proprietor: DENSO THERMAL SYSTEMS S.p.A., 10046 Poirino (Torino) (IT)
(72) Inventor: Cigaina, Alberto, 10046 Poirino (Torino) (IT)
(74) Representative: Quinterno, Giuseppe

(56) References cited:
- EP-A- 1 857 307
- FR-A- 2 761 011
- FR-A- 2 794 070

## Description

The present invention relates to an air-conditioning assembly for vehicles according to the preamble of Claim 1, which is known from the EP-B1-1109689. This document describes an air-conditioning assembly provided with a single mixing flap, which, in a first end position opens the communication section between the cooling chamber and the mixing chamber and simultaneously closes the communication section between the heating chamber and the cooling chamber and the communication section between the heating chamber and the mixing chamber. In a second end position, the mixing flap closes the communication section between the cooling chamber and the mixing chamber and simultaneously opens the communication section between the cooling chamber and the heating chamber and the communication section between the heating chamber and the mixing chamber.

In this known solution, the heating radiator is housed in a substantially U-shaped channel and is set with a marked inclination with respect to the evaporator. Consequently, the flow of air that traverses the evaporator must be deflected by approximately 90° to enable its passage through the heating radiator.

The documents DE-A1-10322457 and EP-A1-1070611 describe solutions in which the heating radiator is parallel or substantially parallel to the evaporator. These solutions present the advantage of having a more compact structure with a better distribution of the flow of air as compared to the solution described in the EP-B1-1109689. In these known solutions a mixing flap is provided having a first portion articulated to the casing and a second portion having a first end articulated to the first portion and a second end that slidably engages a guide that extends in front of the heating radiator. A drawback of these solutions is represented by the fact that in the position of the mixing flap corresponding to a completely cold airflow, the communication section between the heating chamber and the mixing chamber remains open, which penalizes the efficiency of cooling of the assembly. FR-2761011 shows an air-conditioning assembly according to the preamble of claim 1.

The object of the present invention is to provide an air-conditioning assembly that will overcome the drawbacks of the known solutions.

According to the present invention, said object is achieved by an air-conditioning assembly having the characteristics forming the subject of Claim 1.

The present invention will now be described in detail with reference to the attached drawings, which are provided purely by way of non-limiting example, and in which:
- Figure 1 is a schematic cross section of an air-conditioning assembly according to the present invention, with the mixing device in a first end position;
- Figure 2 is a cross section similar to that of Figure 1 illustrating the air-conditioning assembly in a second end position;
- Figure 3 is a perspective view illustrating the mixing device in the first end position; and
- Figure 4 is a perspective view illustrating the mixing device in the second end position.

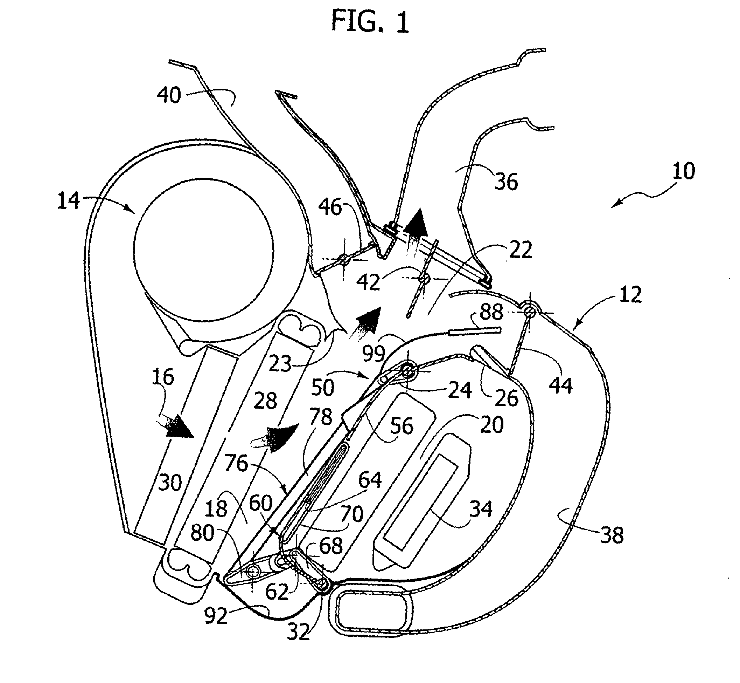

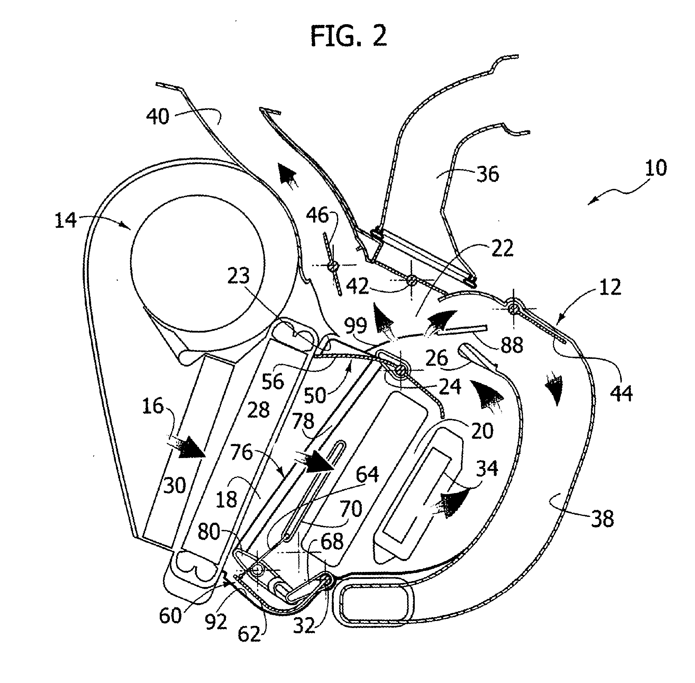

With reference to Figures 1 and 2, designated by 10 is an air-conditioning assembly according to the present invention. The assembly 10 includes a casing 12 that functions as support for the various components of the assembly 10. Housed in the casing 12 is a centrifugal fan 14, which generates a flow of air oriented in the direction indicated by the arrow 16.

Defined in the casing 12 are a cooling chamber 18, a heating chamber 20, and a mixing chamber 22. A first section 23 sets the cooling chamber 18 in communication with the mixing chamber 22. A second section 24 sets the cooling chamber 18 in communication with the heating chamber 20, and a third section 26 sets the heating chamber 20 in communication with the mixing chamber 22.

Housed in the cooling chamber 18 is an evaporator 28. Preferably, a filter 30 is set upstream of the evaporator 28. A heating radiator 32 is housed in the heating chamber 20. Downstream of the heating radiator 32 there may be set a supplementary electrical heater 34, for example of the PTC type.

The mixing chamber 22 communicates with a plurality of ducts for distribution of the flow of air. For example, there can be provided a duct 36 for front distribution, a duct 38 for distribution of the airflow towards the feet, and a duct 40 for the distribution of the airflow towards the base of the windscreen of the vehicle (defrosting). The distribution ducts 36, 38, 40 are associated to respective distribution flaps 42, 44, 46. The distribution flaps 42, 44, 46 are able to turn about respective axes orthogonal to the plane of representation of Figures 1 and 2 and are mobile for opening or closing (either partially or completely) the sections of communication between the mixing chamber 22 and the distribution ducts 36, 38, 40.

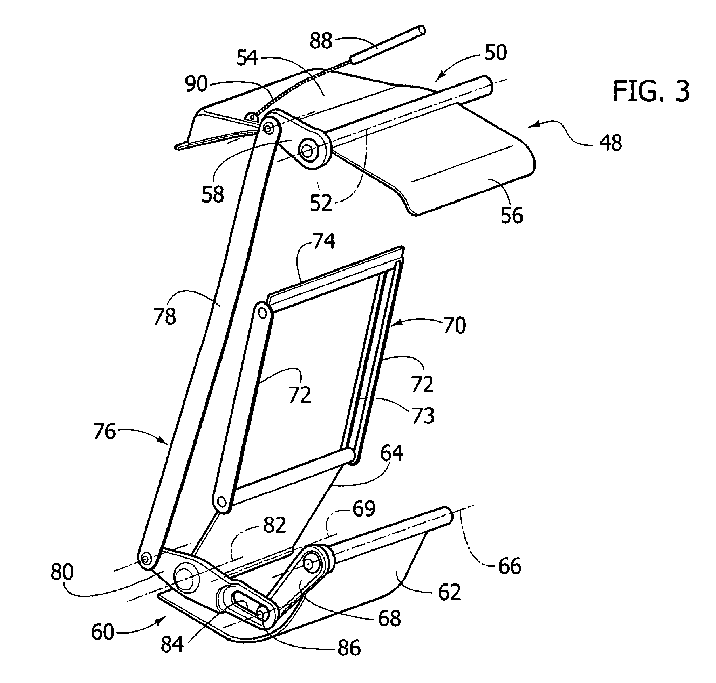

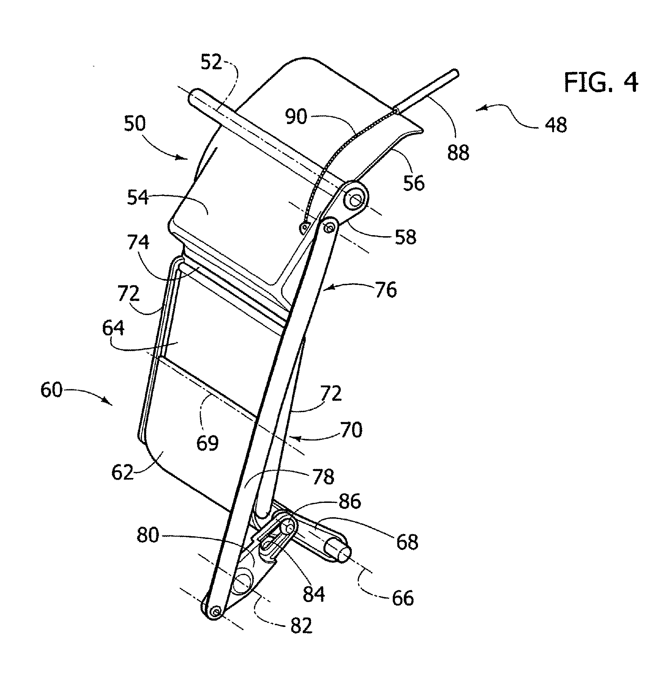

The assembly 10 according to the present invention includes a mixing device 48, which is illustrated in greater detail in Figures 3 and 4. The mixing device 48 includes a first mixing flap 50 articulated to the casing 12 about a first axis 52 orthogonal to the plane of representation of Figures 1 and 2. The first mixing flap 50 includes two portions 54, 56 fixed to one another, which extend on opposite sides with respect to the axis of articulation 52. The first mixing flap 50 further includes a lever 58 fixed to the flap 50 in a region corresponding to the axis 52.

The mixing device 48 includes a second mixing flap 60 including a first portion 62 and a second portion 64. The first portion 62 is articulated to the casing 12 about a second axis of articulation 66 parallel to the first axis of articulation 52. The first portion 62 is substantially shaped like a bracket and is articulated about the axis 66 at one end of its own. A lever 68 is fixed to the first portion 62 in an area corresponding to the axis 66. The second portion 64 of the second mixing flap 60 is formed by a substantially plane sheet of rigid plastic material having a first end articulated to the free end of the first portion 62 about an axis 69 parallel to the axis of articulation 66. The opposite end of the second portion 64 slidably engages a guide 70 fixed with respect to the casing 12. The guide 70 includes two parallel elements 72 provided with respective guide grooves 73 (only one of which is visible in Figure 3) engaged by lateral projections (not visible in the figures) provided at the second end of the second portion 64. The two guide elements 72 are preferably joined by a cross member 74.

The first and second mixing flaps 50, 60 are joined to one another by means of a transmission mechanism 76 arranged for reversing the movements of rotation of the first mixing flap 50 and of the first portion 62 of the second mixing flap 60 about the respective axes of articulation 52, 66.

The transmission mechanism 76 includes a rod 78 having an end articulated to the lever 58 of the first mixing flap 50. The opposite end of the rod 78 is articulated to a rocker 80, which is articulated to the casing 12 about an axis 82 parallel to the axes of rotation 66, 69. The rocker 80 has at the opposite end a slot 84 that is engaged by a pin 86 provided at the distal end of the lever 68.

The mixing device 48 is controlled by means of a flexible transmission member of a Bowden type including a sheath 88 and a cable 90 having an end anchored to the first portion 54 of the first mixing flap 50.

Figures 1 and 3 illustrate the mixing device 48 in a first end position. In this position, the second portion 56 of the first mixing flap 50 closes the section 26 that sets the heating chamber 20 in communication with the mixing chamber 22. The first portion 56 of the first mixing flap 50 closes the top part of the second section 24 that sets the cooling chamber 18 in communication with the heating chamber 20. In this first end position, the second mixing flap 60 closes the bottom part of the second section 24. In this condition, the airflow traverses the evaporator 28 and reaches directly the mixing chamber 22. Hence, in this condition the airflow is completely cold. A particularly important characteristic of the present invention is that, in the condition of completely cold flow, the heating chamber 20 is completely isolated from the mixing chamber 22 so as to prevent any loss of cooling efficiency of the assembly 10.

In the second end position illustrated in Figures 2 and 4, the first portion 56 of the first mixing flap 50 closes the communication section 23. The second portion 54 of the first mixing flap 50 leaves the third communication section 26 open. In this position, the second communication section 24 is completely open. The first portion 62 of the second mixing flap 60 is housed in a recess 92 of the casing 12, and the second portion 64 of the second mixing flap 60 is in a lowered position that leaves the entire front surface of the heating radiator 32 exposed to the cold flow coming from the cooling chamber 18. In this condition, the entire airflow traverses the cooling chamber 18 and the heating chamber 20 and then reaches the mixing chamber 22 through the third communication section 26.

The mixing device 48 can assume any intermediate position between the two end positions illustrated in Figures 1 and 2. In the intermediate positions, a part of the flow reaches the mixing chamber 22 through the first communication section 23 and a part of the flow traverses the heating chamber 20 and reaches the mixing chamber 22 through the third communication section 26. The temperature of the airflow can hence be varied by varying the position of the first mixing flap 50 and of the second mixing flap 60. The solution according to the present invention enables control of both of the mixing flaps 50, 60 with a single control 88, 90.

Another characteristic aspect of the present invention is that the heating radiator 32 is set facing, and substantially parallel to, the evaporator 28. This enables a uniform flow from the cooling chamber 18 to the heating chamber 20. The entire surface of the heating radiator 32 is impinged upon by the airflow coming from the cooling chamber 18. This arrangement enables a uniform heating of the airflow and a compact front of hot air to be obtained in the mixing chamber 22. The solution according to the present invention is moreover particularly compact and constituted by a small number of components that can be assembled in a simple and fast way.

## Claims

1. An air-conditioning assembly for vehicles, including:
- a casing (12), including a cooling chamber (18), a heating chamber (20), and a mixing chamber (22), the casing (12) further including a first section (23) that sets the cooling chamber (18) in communication with the mixing chamber (22), a second section (24) that sets the cooling chamber (18) in communication with the heating chamber (20), and a third section (26) that sets the heating chamber (20) in communication with the mixing chamber (22);
- an evaporator (28), housed in the cooling chamber (18);
- a heating radiator (32), housed in the heating chamber (20); and
- a mixing device (48), which is mobile between a first end position and a second end position, in which in the first end position the mixing device closes the second and third sections (24, 26) and leaves the first section (23) open, and in which in the second end position the mixing device (48) closes the first section (23) and leaves the second and third sections (24, 26) open, wherein the mixing device (48) includes a first mixing flap (50) articulated to the casing (12) about a first axis (52), the first mixing flap (50) having a first portion and a second portion (54, 56) fixed to one another and set on opposite sides with respect to said first axis (52), wherein the first portion (54) closes said first section (23) in said second end position, and wherein the second portion (56) closes said third section (26) in said first end position,
said assembly being **characterized in that** it includes a second mixing flap (60) including a first portion (62) articulated to the casing (12) about a second axis (66) parallel to said first axis (52), and a second portion (64) having a first end articulated to the first portion (62) about a third axis (69) parallel to the first and second axes (52, 66) and a second end that slidably engages a guide (70), wherein the first mixing flap (50) and the first portion (62) of the second mixing flap (60) are connected together by means of a transmission mechanism (76) arranged for reversing the movements of rotation of the first mixing flap (50) and of the first portion (62) of the second mixing flap (60) about the respective axes of articulation (52, 66).

2. The air-conditioning assembly according to Claim 1, **characterized in that** in said first end position of the mixing device (48) the first portion (54) of the first mixing flap (50) closes a top end of the second section (24), and said first and said second portions (62, 64) of the second mixing flap (60) close a bottom part of said second section (24).

3. The air-conditioning assembly according to Claim 1, **characterized in that** said transmission mechanism (76) includes a first lever (58) fixed to the first mixing flap (50), a second lever (68) fixed to the first portion (62) of the second mixing flap (60), a rod (78) having an end articulated to said first lever (58), and a rocker (80) articulated to the casing (12) and moreover articulated to a second end of said rod (78), the rocker (80) having a slot (84) engaged in a slidable way by a pin (86) set at one end of said second lever (68).

4. The air-conditioning assembly according to any one of the preceding claims, **characterized in that** said heating radiator (32) is set facing said evaporator (28).

## Patentansprüche

1. Klimaanlage für Fahrzeuge, wobei die Klimaanlage umfasst:
ein Gehäuse (12), das eine Kühlkammer (18), eine Heizkammer (20) sowie eine Mischkammer (22) aufweist, wobei das Gehäuse (12) weiters einen ersten Abschnitt (23), der die Kühlkammer (18) mit der Mischkammer (22) in Verbindung bringt, einen zweiten Abschnitt (24), der die Kühlkammer (18) mit der Heizkammer (20) in Verbindung bringt, sowie einen dritten Abschnitt (26) aufweist, der die Heizkammer (20) mit der Mischkammer (22) in Verbindung bringt;
einen Verdampfer (28), der in der Kühlkammer (18) untergebracht ist;
ein Heizelement (32), das in der Heizkammer (20) untergebracht ist; und
eine Mischeinrichtung (48), die zwischen einer ersten Endstellung und einer zweiten Endstellung bewegbar ist, wobei die Mischeinrichtung in der ersten Endstellung den zweiten und den dritten Abschnitt (24, 26) verschließt und den ersten Abschnitt (23) offen lässt, und wobei die Mischeinrichtung (48) in der zweiten Endstellung den ersten Abschnitt (23) verschließt und den zweiten und den dritten Abschnitt (24, 26) offen lässt, wobei die Mischeinrichtung (48) eine erste Mischklappe (50) aufweist, die im Gehäuse (12) um eine erste Achse (52) gelenkig gelagert ist, wobei die erste Mischklappe (50) einen ersten Teil und einen zweiten Teil (54, 56) besitzt, die aneinander befestigt und an gegenüberliegenden Seiten der ersten Achse (52) angebracht sind, wobei der erste Teil (54) in der zweiten Endstellung den ersten Abschnitt (23) verschließt, und wobei der zweite Teil (56) in der ersten Endstellung den dritten Abschnitt (26) verschließt,
wobei die Anlage **dadurch gekennzeichnet ist, dass** sie eine zweite Mischklappe (60) aufweist, die einen ersten Teil (62), der im Gehäuse (12) um eine zweite Achse (66) gelenkig gelagert ist, die parallel zur ersten Achse (52) verläuft, sowie einen zweiten Teil (64) aufweist, der ein erstes Ende, das im ersten Teil (62) um eine dritte Achse (69) gelenkig gelagert ist, die parallel zur ersten und zweiten Achse (52, 66) verläuft, sowie ein zweites Ende besitzt, das in eine Führung (70) verschiebbar eingreift,
wobei die erste Mischklappe (50) und der erste Teil (62) der zweiten Mischklappe (60) miteinander über einen Übertragungsmechanismus (76) verbunden sind, der so aufgebaut ist, dass er die Drehbewegungen der ersten Mischklappe (50) und des ersten Teils (62) der zweiten Mischklappe (60) um die entsprechende Gelenksachse (52, 66) umkehrt.

2. Klimaanlage gemäß Anspruch 1, **dadurch gekennzeichnet, dass** in der ersten Endstellung der Mischeinrichtung (48) der erste Teil (54) der ersten Mischklappe (50) ein oberes Ende des zweiten Abschnitts (24) verschließt und der erste und der zweite Teil (62, 64) der zweiten Mischklappe (60) einen unteren Teil des zweiten Abschnitts (24) verschließen.

3. Klimaanlage gemäß Anspruch 1, **dadurch gekennzeichnet, dass** der Übertragungsmechanismus (76) einen ersten Hebel (58), der an der ersten Mischklappe (50) befestigt ist, einen zweiten Hebel (68), der am ersten Teil (62) der zweiten Mischklappe (60) befestigt ist, eine Stange (78), die ein Ende besitzt, das im ersten Hebel (58) gelenkig gelagert ist, sowie einen Kipphebel (80) aufweist, der im Gehäuse (12) und weiters in einem zweiten Ende der Stange (78) gelenkig gelagert ist, wobei der Kipphebel (80) einen Schlitz (84) besitzt, in den ein Zapfen (86) verschiebbar eingreift, der an einem Ende des zweiten Hebels (68) sitzt.

4. Klimaanlage gemäß irgendeinem der bisherigen Ansprüche, **dadurch gekennzeichnet, dass** das Heizelement (32) so angeordnet ist, dass es dem Verdampfer (28) gegenüberliegt.

## Revendications

1. Ensemble de climatisation pour véhicules, comprenant :
✔ un boîtier (12), comprenant une chambre de refroidissement (18), une chambre de chauffage (20), et une chambre de mélange (22), le boîtier (12) comprenant en outre une première section (23) qui met la chambre de refroidissement (18) en communication avec la chambre de mélange (22), une deuxième section (24) qui met la chambre de refroidissement (18) en communication avec la chambre de chauffage (20), et une troisième section (26) qui met la chambre de chauffage (20) en communication avec la chambre de mélange (22) ;
✔ un évaporateur (28), logé dans la chambre de refroidissement (18) ;
✔ un radiateur de chauffage (32), logé dans la chambre de chauffage (20) ; et
✔ un dispositif de mélange (48), qui est mobile entre une première position d'extrémité et une seconde position d'extrémité, dans lequel, dans la première position d'extrémité, le dispositif de mélange ferme les deuxième et troisième sections (24, 26) et laisse la première section (23) ouverte, et dans lequel, dans la seconde position d'extrémité, le dispositif de mélange (48) ferme la première section (23) et laisse les deuxième et troisième sections (24, 26) ouvertes, dans lequel le dispositif de mélange (48) comprend un premier volet de mélange (50) articulé sur le boîtier (12) autour d'un premier axe (52), le premier volet de mélange (50) possédant une première partie et une seconde partie (54, 56) fixées l'une à l'autre et placées sur des côtés opposés par rapport audit premier axe (52), dans lequel la première partie (54) ferme ladite première section (23) dans ladite seconde position d'extrémité, et dans lequel la seconde partie (56) ferme ladite troisième section (26) dans ladite première position d'extrémité,
ledit ensemble étant **caractérisé en ce qu'**il comprend un second volet de mélange (60) comprenant une première partie (62) articulée sur le boîtier (12) autour d'un deuxième axe (66) parallèle audit premier axe (52), et une seconde partie (64) possédant une première extrémité articulée sur la première partie (62) autour d'un troisième axe (69) parallèle aux premier et deuxième axes (52, 66) et une seconde extrémité qui entre en prise de façon coulissante avec un guidage (70),
dans lequel le premier volet de mélange (50) et
la première partie (62) du second volet de mélange (60) sont reliés l'un à l'autre au moyen d'un mécanisme de transmission (76) agencé pour inverser les mouvements de rotation du premier volet de mélange (50) et de la première partie (62) du second volet de mélange (60) autour des axes respectifs d'articulation (52, 66).

2. Ensemble de climatisation selon la revendication 1, **caractérisé en ce que**, dans ladite première position d'extrémité du dispositif de mélange (48), la première partie (54) du premier volet de mélange (50) ferme une extrémité supérieure de la deuxième section (24), et lesdites première et seconde parties (62, 64) du second volet de mélange (60) ferment une partie inférieure de ladite deuxième section (24).

3. Ensemble de climatisation selon la revendication 1, **caractérisé en ce que** ledit mécanisme de transmission (76) comprend un premier levier (58) fixé au premier volet de mélange (50), un second levier (68) fixé à la première partie (62) du second volet de mélange (60), une tige (78) possédant une extrémité articulée sur ledit premier levier (58), et un basculeur (80) articulé sur le boîtier (12) et en outre articulé sur une seconde extrémité de ladite tige (78), le basculeur (80) possédant une fente (84) avec laquelle une goupille (86) placée à une extrémité dudit second levier (68) entre en prise de manière coulissante.

4. Ensemble de climatisation selon une quelconque des revendications précédentes, **caractérisé en ce que** ledit radiateur de chauffage (32) est placé en face dudit évaporateur (28).
